Europäisches Patentamt

European Patent Office

Office européen des brevets

(19)

(11) Publication number: **0 292 063**
**A2**

(12) **EUROPEAN PATENT APPLICATION**

(21) Application number: **88200979.8**

(22) Date of filing: **17.05.88**

(51) Int. Cl.⁴: **A23P 1/08 , A23G 3/20 , A21C 15/00**

(30) Priority: **18.05.87 IT 2056487**

(43) Date of publication of application:
**23.11.88 Bulletin 88/47**

(84) Designated Contracting States:
**AT BE CH DE ES FR GB GR IT LI LU NL SE**

(71) Applicant: **Dott. Bonapace & C. S.p.A.**
**Via Canova, 12**
**I-20145 Milano(IT)**

Applicant: **ITEP S.p.A.**
**Via Piedimonte 34**
**I-22049 Valmadrera Province of Como(IT)**

(72) Inventor: **Cosentino, Roberto**
**Via B. Rucellai, 20**
**I-20126 Milano(IT)**
Inventor: **Cocchi, Sergio**
**Via Pessina, 15**
**I-22100 Como(IT)**

(74) Representative: **Riccardi, Sergio**
**Riccardi & Co. Via Macedonio Melloni, 32**
**I-20129 Milano(IT)**

(54) **Electrostatic installation for the treatment of food products.**

(57) A process and an installation for the application in general of food powders such as sugar, dextrose, fructose, starches, flour etcetera on food products such as snacks, biscuits, savouries, cakes, icecream etcetera; particularly by means of electrostatic deposition which permits the powder to be deposited uniformly and the excess powder sprayed to be recovered with a system for feeding and recycling the powder, suitably sieved, eventually dried, heated and sprayed by air, which is in turn filtered, dried and heated. Spraying is by means of adjustable position and orientation spray guns preferably provided with systems of movement during the spraying operation, with special systems for turning, rotating, traversing the products to be treated and in particular a system for the recovery of the excess powder.

Fig. 1

# "ELECTROSTATIC INSTALLATION FOR THE TREATMENT OF FOOD PRODUCTS"

The present invention relates to an installation and a process for depositing powdered substances such as sugars, starches, cocoa etc. on food products moved by a conveyor belt by means of electrostatic deposition. A large variety of food products are coated with substances in powder, for example biscuits with sugar or dextrose, doughnuts, sweets, icecream with cocoa powder etc.

Normally these treatments are carried out either manually or by means of mechanical systems obtained by the use of vibrating hoppers from which the powder is sprinkled onto the products through special sieves or meshes.

Another system used is to feed the products to be coated into a rotating drum whose axis is at a slight angle and, at the same time, to put the coating powdered substance into the drum. The mixing of the products produced by the rotation of the drum is sufficient to provide a reasonably homogeneous coating.

This system has one substantial flaw and this is that friable products such as biscuits and snacks tend to break or to crumble thus producing a considerable amount of rejects and a considerable amount of waste.

These mechanical systems have an additional negative factor due to the excessive wastage of the powder because of the amount which falls off the products during transport and packaging, apart from the portion which is dispersed into the air. Thus, powder in the air also produces a high level of pollution which often makes the working conditions of the machine operators unacceptable.

When the process is carried out manually there are obvious problems of quality and lack of uniformity between one item and the next, pollution due to excessive handling of the products and excessively high labour costs.

The present invention relates to a device and a process for the electrostatic application of food substances in powder (granulometry from 5 to 200 microns on products which are also food products). Processes for the electrostatic application of powders to various types of products are already known, especially in painting and enamelling. The products are introduced into a cabin at a suitable speed, hanging from an overhead conveyor belt or transported horizontally on a belt or even introduced manually by the machine operator or by an automatic robot system. Inside this cabin, the powder is sprayed onto the products by spray-guns, said powder then adhering to the products in order to permit subsequent technological processes to be carried out on them.

However, in practice, not all of the powder sprayed adhere to the products. Part of this powder remains in suspension inside the spraying cabin, part accumulates adhering to the wall or the floor, the rest tends to exit through the apertures provided for the entry and exit of the products and for the passage of the robot, if it does not encounter air entering the cabin at a sufficient speed to keep the powder inside the confines of the cabin itself. This air is sucked inside the cabin by a special suction system installed inside the cabin or outside it and, obviously, it performs the double task of keeping the powder inside the cabin and subsequently filtering the powder out of the air so that clean air can be expelled into the external environment. The powder sucked out by the suction system is recycled in different ways to the powder container where it is mixed with the new powder. The suction systems employed are generally of the type with replaceable sleeve filters located inside the cabin or located outside the cabin such as for example trolley-mounted filters coupled to the cabin or connected to it by tubing; or centrifugal separator systems with a final disposable filter.

The electrostatic field built-up between the gun and the product, created both by the electrode of the spray-gun and the electrostatically charged cloud of powder, has lines of force which impel the powder along curvilinear trajectories so that even the areas which are not in line of sight are also coated. In this way the electrostatic charge confers double performance on the powder i.e. adhesion after application and uniformity of distribution.

One critical factor in the traditional systems of powder application is, in fact, the extraction and recovery of the excess powder which falls off the products or remains suspended in the air, creating considerable problems of control. The present invention introduces specific innovations with regard to the technologies utilised up until now for the application of powders on food products, introducing radical innovations with regard to product cycle and machine cycle compared to the techniques already described.

The above-mentioned problems are solved by the installation of the present invention which is composed by a tunnel chamber, a product transport system installed inside the said chamber, a system of electrostatic spraying and recycling of the powder and an optional device for drying the chamber after washing. This is accompanied by a suction system, the powder container complete with the recycle of the overspray, an eventual drying unit and a recovery system for the excess powder constituted by a self-propelled belt installed at the base of the tunnel.

The characteristics, scope and advantages of the installation of this invention will made clearer and more evident by the detailed description of some preferential embodiments, provided below purely as a non-limiting example and referring to the attached illustrative drawings, in which:

Figure 1 is a side view of a highly preferred embodiment of the installation according to this claim;

Figure 2 is a view of the installation of Figure 1 seen from above;

Figure 3 is a head-on view of the said installation;

Figure 4 is an enlarged perspective view of the system for the recovery of the excess powder installed at the bottom of the installation;

Figure 5 is a complete perspective view of the installation;

Figure 6 is a side view of a second embodiment of the installation, provided with a system for turning over the pieces which are treated;

Figure 7 is a view of the installation of Figure 6 from above;

Figure 8 is a head-on view of the installation of Figure 6.

In the various figures of the drawings attached, reference numbers which are the same identify parts which are either the same or equivalent and it must be emphasised that only those elements which are characteristics of the invention and are important for understanding the functions and phases of the process are mentioned and described. Structural support and movement elements which are not particularly difficult to construct and which form part of the normal technical knowledge of an expert in this field are not described in detail.

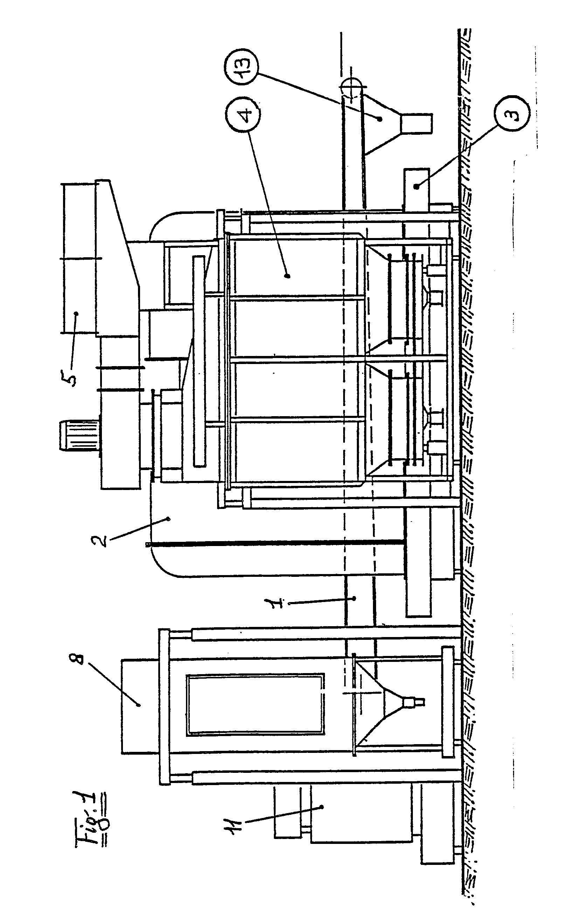

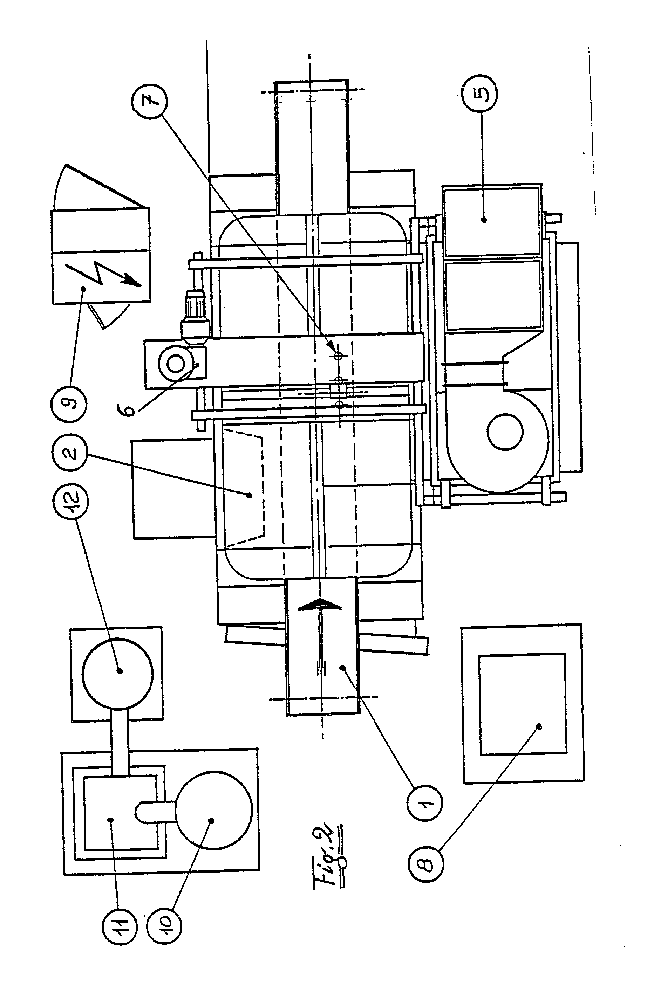

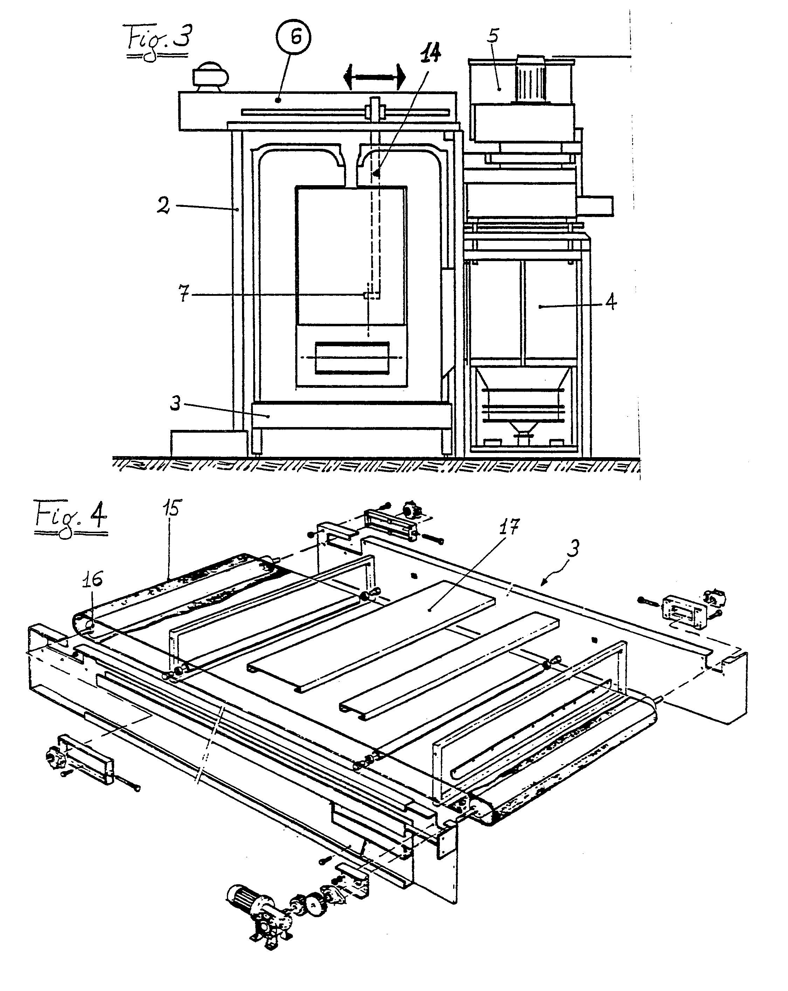

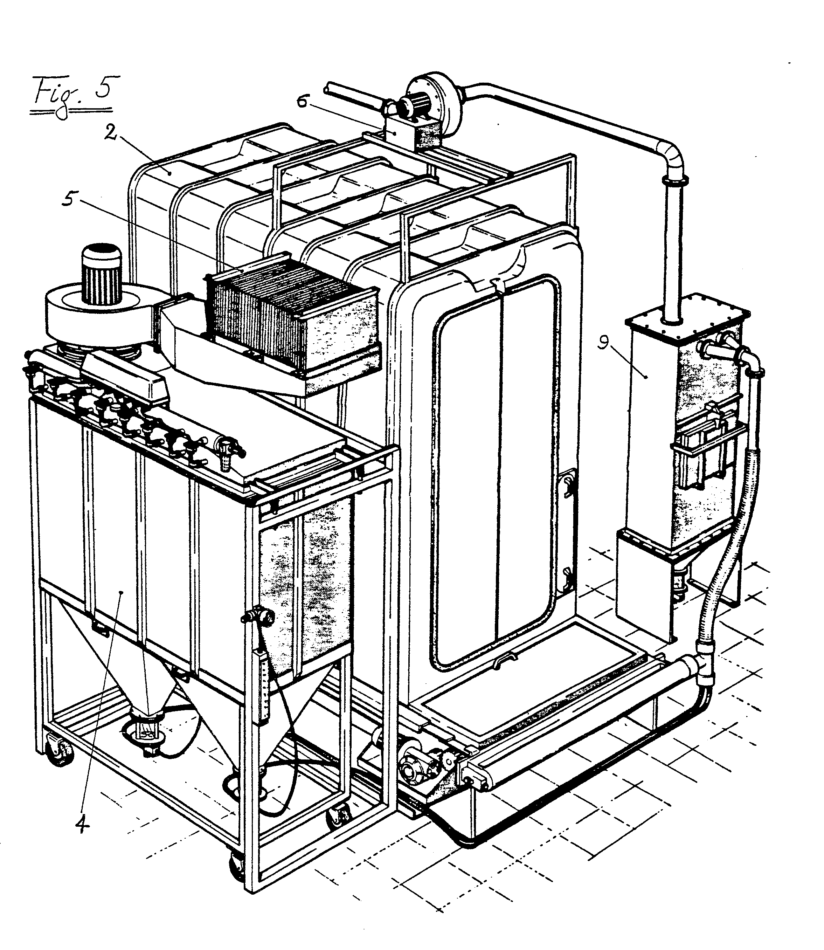

Referring first to Figure 1 to 5 of the attached drawings, the first embodiment of the installation which is the one for more general use, is now described.

The products are fed in by a belt or some other type of transport system, according to the characteristics of the product to be covered. In this case the transport system of the products to be treated is constituted by a conveyor belt 1, which performs a double function: it transports the products and receives the overspray of the powder sprayed from the sprayguns.

The belt 1 is of the endless type with continuous or intermittent movement, stretched between two rollers, a driving roller and a driven roller, and carries the products to the spraying devices which are normally known as spray-guns 7 where the products are uniformly covered. The spray-guns 7 can be fixed but it is better if they are moved in a suitable way be some sort of trunnion type fixture or moved by reciprocators 6 or robots.

The spray-guns 7 are arranged on supports 14 whose height can be regulated and they are also orientable by means of articulated joints. The spray-guns can make a rotating alternating movement using a symmetrical system of projecting the powder in order to obtain uniform coating. A scraper or a similar instrument recovers the powder deposited on the belt which is then sent to a recovery hopper 13 and then sent on for recycling.

The remaining powder which constitutes the overspray falls by gravity to the base or bottom 3 of the cabin 2, where it is collected by a self-propelling belt 15 of the endless type, moved by rollers 16 which carries the powder which has fallen onto it to a suction system where it is recycled to the feeder 4 after filtering through the very fine filter 8 and sifting through the sifter 10, while another filter 12 filters the fresh powder to be fed into the system. The shoulders of the machine bed 3 support the plates 17 inserted under the upper section of the self-propelling belt 15, in order to provide a walkway to permit access inside the chamber when necessary for maintenance or other purposes.

When the whole surface of the product has to be coted or when the shape of the product is such that both sides cannot be coated at the same time even be exploiting the enveloping effect of the electrostatic application, since one of the surfaces rests on the belt, then the product has to be turned during the coating process.

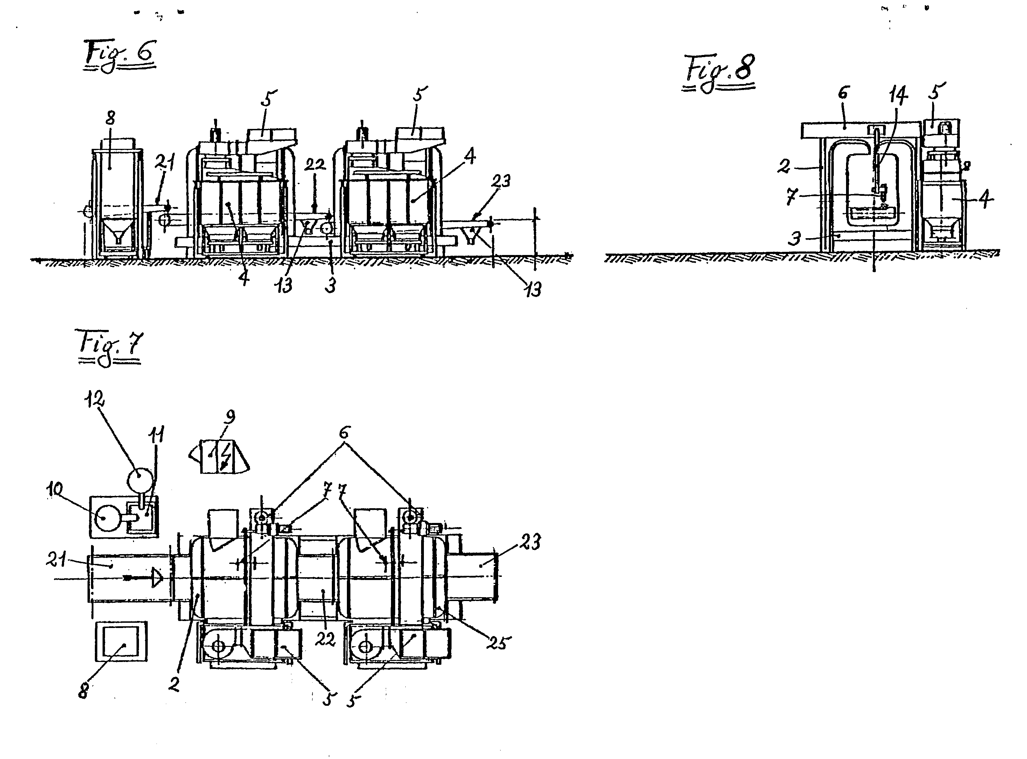

In this case the installation is modified as illustrated in the form of the embodiment shown in Figures 6-8, in which the transporting system is constituted by two aligned conveyor belts 22 and 23 moving in the same direction and with the final section of the first belt located above the initial section of the second. This arrangement of the belts can be adjusted with regard to angle, height and reciprocal speed, and, while still moving, it permits the product to execute a 180° turn as it drops from the end of the first belt to the beginning of the second belt and thus the whole of the exposed surface is covered by the spray-guns of the second application station or cabin 25. Since the powder is applied electrostatically, it adheres to the product even during the drop from the first belt 22 to the second belt, because once the powders are applied in this way they cling tenaciously to the substratum. At the termination of the conveyor belt, a scraper or another suitable system, removes the powder which has adhered to the belts and drops it into a hopper 13 underneath, where a pneumatic system automatically recycles it to the feeder 11.

In the case of products which have an unusual shape, for example biscuits which have two sides which are shaped differently, the products must be loaded in the normal position, turned so that the bottom side can be coated first and then turned once again so that the top side can be coated in order to ensure that they are not damaged in any way. In this case a third belt 21 is provided, located before the first chamber 2 at a higher level than the first belt 22, in order to perform the first turning of the product.

As has already been said, the granulometry of powder used for food products is between 0 and 200 microns and its uniformity and flowability is guaranteed by vortex 10 and crumbling 12 sieves. The powder is fed from the feeder 11 to the spray guns 7 by means of Venturi systems with controlled rate of flow, through pipes made of special anti-static, anti-abrasive materials approved for use with food products.

As described, the spray guns spray powder mixed with air in a container known as a cabin 2 or 25, whose upper side walls are preferably constructed of smooth anti-adherent and antistatic materials and are provided with apertures for the entry and exit of the products. The suction system extracts the air from the cabin together with a certain amount of the powder which must subsequently be separated and collected in the feeder. The general or main filter 4 acts as the suction or separator device but this can be replaced by a centrifugal separator or a similar device. To keep the level of humidity in the cabin low and to dry it after washing, the air should be recycled in the cabin after the amount of air required to obtain the de-pressuring has been by-passed through the valve.

The rest of the air is returned to the working environment after having been completely filtered through the absolute filter 5.

Where necessary, a heater can be inserted after the bypass for heating purposes. In other solutions the heater can be located in the cabin. All the functions of the installation are controlled by the machine operator from a control panel 9.

It must be understood that numerous variations, modifications, additions and/or substitutions can be made to the installation of the invention while still remaining within its spirit and scope and its scope of protection as defined in the claims attached hereto.

**Claims**

1. Process for the application of substances in powder on food products by electrostatic deposition characterised by the system of transporting the products inside a cabin, constituted by a conveyor belt which, in addition to transporting the products, collects a first portion of the powder not applied to the products, while the remainder of the excess powder is collected on a moving belt located below the first belt, on which the powder falls and is subsequently collected and recycled in correspondance to the feeding device.

2. Process according to claim 1, characterised by the fact that the conveyor belts, that is to say the upper one of the product and excess powder and the lower one of the excess powder, are located in a spraying cabin de-pressured by a suction system which removes from the cabin the remaining portion of excess powder, separating it from the air by means of filters, sending it on to the feeding and recycling device.

3. Process according to claims 1 and 2, characterised by the fact that the conveyor belt for the products can be constituted by two separate belts so as to guarantee that the product turns over completely or not as it falls from the first belt to the second and that, as a result of the electrostatic effect, the powder applied in the first station does not became detached from the products because of the shock of the turning movement on impact with the second belt and that in this way the products can be coated also on the bottom side which rested on the first belt, obtaining finally a global uniform coating by electrostatic means.

4. Process according to claim 1, characterised by the fact that the electrostatic spray guns are provided with a movement imparted by reciprocators or robots and this movement guarantees uniform application of the powder on the product.

5. Process according to claims 1, 2, 3 characterised by the fact that the excess powder constituted by the powder obtained from the base of the upper product transporter belt by means of a scraper and a hopper, of the excess powder collected at the end from the lower powder collecting belt by a pneumatic system or another similar system and the remaining powder originating in and separated from the chamber by means of special general filters, is collected and sent to the feeding device for recycling, while the purified air is totally filtered once again by means of an absolute filter and returned to the environment.

6. Installation for the containment and application of powder on food products preferably by means of electrostatic application or by similar means which suitable for conferring on the powder the physical characteristics of adhesion to the products on which it is sprayed according to claims 1, 2, 3, 4 characterised by the fact that the spraying chamber is constituted by one or more cabins in sequence formed by a boxed body or closed cabin, with apertures at each end for the entry and exit of products transported by one or more continuous belts stretched on two rollers, one a driving and one a driven roller, said transport system having a continuous or intermittent movement, said boxed body being provided with side and upper walls preferably in smooth antiadherent and antistatic material, and the lower part being constituted by a self-propelling belt for the collection of the excess sprayed powder, said boxed body also being provided with suitable apertures for fastenings and suction systems in order to keep it under decompression in order to stop the sprayed powder from getting out of said boxed body.

7. Installation according to claims 1, 2, 3, 4, 5, 6 characterised by the fact that the powder utilised is for food uses with a granulometry of between 0 and 200 microns.

8. Installation according to claim 6, characterised by the fact that the uniformity and flowability of the granulometry of the powder to be applied is guaranteed by centrifugal crumbler sieves installed above the feeding hopper.

9. Installation according to claims 7 and 8, characterised by the fact that the powder is supplied to the spray guns by a Venturi system with a system for regulating the suctioned powder sent to the spray guns through pipes in special antistatic, antiabrasive material which is approved for food uses.

10. Installation for the application of food powders such as sugars, starches, flour, cocoa and derivatives on food products such as biscuits, snacks, pastries, cakes, savouries, icecreams substantially as previously described and as illustrated in the various figures of the drawings attached herewith for the scopes described above.

0 292 063

Fig. 1

Fig.2

0 292 063

Fig. 3

Fig. 4

0 292 063

Fig. 5

Fig. 6

Fig. 8

Fig. 7